# DEMANDE DE BREVET EUROPEEN

(11) **EP 1 225 037 A1**
(43) Date de publication de la demande: **24.07.2002**
(21) Numéro de dépôt: 02290016.1
(22) Date de dépôt: 07.01.2002
(51) Int. Cl.: B32B 27/34, B32B 27/30, B32B 27/32, B32B 27/28

(54) **Film multicouche thermoformable pour la protection de substrats et objets obtenus**

(30) Priorité: 22.01.2001 FR 0100879
(71) Demandeur: Atofina, 92800 Puteaux (FR)
(72) Inventeur: Silagy, David, 27000 Evreux (FR); Bussi, Philippe,, 76000 Rouen (FR); Bertoux, Franck, 92800 Puteaux (FR); Bonnet, Anthony, 27470 Serquigny (FR)
(74) Mandataire: Neel, Henry

(57) **Abrégé**

La présente invention concerne un film multicouche thermoformable comprenant successivement :
au moins une couche choisie parmi les couches (A1) et (A2) et telle que si (A2) est présente alors (A2) est disposée contre l'éventuelle couche (B1), éventuellement une couche (B1), une couche (B2), une couche (B3), éventuellement une couche (B4), **dans lequel,** la couche (A1) comprend un polymère fluoré (A111) ou un polymère (A112) constitué essentiellement de motifs (meth)acrylate d'alkyle ou un mélange des deux, la couche (A2) est constituée d'encre, la couche (B1) comprend un polymère fluoré (B111) ou un polymère (B112) constitué essentiellement de motifs (meth)acrylate d'alkyle ou un mélange des deux, la couche (B2) est à base de polyamide à terminaisons amines, la couche (B3) est constituée d'une polyoléfine fonctionnalisée par un anhydride d'acide carboxylique insaturé, la couche (B4) est en polyoléfine.

Selon une forme particulière de l'invention la couche (A1) est remplacée par deux couches (A11) et (A12):
- la couche (A11) comprend un polymère fluoré (A111) ou un polymère (A112) constitué essentiellement de motifs (meth)acrylate d'alkyle ou un mélange des deux,
- la couche (A12) comprend en poids 0 à 50% d'un polymère fluoré (A111) et 50 à 100% d'un polymère (A112) constitué essentiellement de motifs (meth)acrylate d'alkyle.

Ce film est obtenu par coextrusion des différentes couches, on peut toutes les coextruder, en coextruder au moins deux puis coucher ensuite les autres couches soit séparément soit par coextrusion ou toute combinaison de ces possibilités. Avantageusement on fabrique séparement un film comprenant les couches (B) et un film comprenant les couches (A) et on les assemble à chaud.

## Description

### [Domaine de l'invention]

La présente invention concerne un film multicouche thermoformable pour la protection de substrats et les objets ainsi obtenus.

Ces films peuvent être notamment utilisés dans les secteurs du bâtiment et du transport. On utilise en particulier dans l'industrie automobile de nombreuses pièces de carrosserie en matière plastique telles que les pare-chocs, les rétroviseurs, le capot, ainsi que les autres pièces telles que les portières et les ailes sans oublier les pièces d'aspect à l'intérieur de l'habitacle. Ces pièces ont l'avantage d'être plus légères que les mêmes pièces en acier, d'être insensibles à la corrosion et d'avoir de meilleures propriétés mécaniques. Ces pièces sont produites par injection de matière fondue et/ou thermoformage de matière thermoplastique. Il existe cependant une difficulté technique à savoir qu'il est beaucoup plus difficile de les peindre que l'acier. Une solution consiste à recouvrir ces pièces d'un film coloré ou décoré, ce film pouvant être mono ou multicouche. Habituellement ce film est disposé au fond d'un moule puis on y injecte la matière plastique fondue (le substrat), après refroidissement et démoulage on obtient la pièce revêtue du film coloré, c'est la technique du surmoulage. L'adhérence du film est assurée par le contact de la matière plastique fondue avec le film provoquant la fusion de la surface du film du coté de l'injection de la matière plastique fondue et donc soudure. On peut aussi coextruder le substrat et le film coloré, coucher le substrat sur le film coloré ou encore presser à chaud le substrat sur le film coloré puis éventuellement thermoformer l'ensemble.

La présente invention concerne ces films et les substrats revêtus selon cette technique.

### [L'art antérieur]

Le brevet US 5514427 propose d'utiliser la technique dite "solvent cast" pour disperser de façon uniforme les pigments, colorants et charges dans un film multicouche. La technologie solvent cast consiste tout d'abord à réaliser une composition liquide de polymère thermoplastique dans un solvant contenant les polymères proprement dit, la dispersion de pigments et les additifs répondant à un cahier des charges donné. Cette composition liquide est ensuite déposée de façon régulière sur une bande porteuse. Cette dernière est amenée dans un four de séchage dans lequel les solvants sont extraits par évaporation et dans lequel la composition est fondue pour former une couche continue. Le film continu est ensuite enroulé. La structure du film comprend en allant de l'intérieur (coté substrat qui est en polyoléfine ou acrylonitrile butadiène styrène) vers l'extérieur une couche de polyoléfine chlorée, une couche adhésive acrylique et une couche pigmentée à base de polymère fluoré et de méthacrylate d'alcoyle.

Le brevet WO 99/37479 décrit un film multicouche obtenu par la technique dite "solvent cast" et lamination qui présente respectivement de l'intérieur(coté substrat) vers l'extérieur une couche adhésive du type "pressure sensitive adhesive" (ou adhésif sensible à la pression), une couche de polymère fluoré pigmentée opaque où les charges ne présentent pas d'orientation particulière et une couche transparente à base de polymère fluoré.

Le brevet EP 949120 propose un film multicouche constitué de l'intérieur vers l'extérieur d'une couche polymère support (polyoléfine, acrylonitrile butadiène styrène, polyamide...), d'une couche méthacrylique de base, d'une couche fluorée pigmentée (sans orientation particulière) de couleur et d'une couche fluorée transparente, ce film pouvant alors être surmoulé par différents substrats, comme des polyoléfines ou des polyamides.

Le brevet US 5725712 propose un film multicouche thermoformable obtenu par lamination constitué de l'intérieur vers l'extérieur d'une couche adhésive, d'une couche de couleur pigmentée où les charges ne présentent pas d'orientation particulière et d'une couche transparente.

Le brevet US 5707697 décrit une pièce extérieure de carrosserie décorée et résistante aux intempéries. Cette pièce est constituée d'un film multi couche obtenu par la technique dite "solvent cast" puis lamination et d'un substrat. La structure du film comprend de l'intérieur vers l'extérieur une couche de polyoléfine chlorée susceptible d'adhérer sur un substrat polyoléfinique, une couche à base de polymère fluoré de couleur pigmentée où les charges ne présentent pas d'orientation particulière et une couche de polymère fluoré transparente présentant un aspect brillant.

Le brevet WO 9640480 décrit une structure multicouche qui de l'intérieur vers l'extérieur présente une couche renfort (de type ABS) revêtue par coextrusion d'un primaire d'adhésion (acrylique), puis d'une couche colorée constituée d'un copolymère à base de PVDF en mélange avec un acrylique et d'une couche transparente de surface constituée d'un mélange de PVDF homopolymère avec un acrylique.

Le brevet WO 9403337 propose un multicouche constitué de l'intérieur vers l'extérieur d'un substrat, d'une couche adhérente constituée d'un composé compatible avec le substrat, d'une couche de renfort, d'une couche colorée qui contient des pigments dans une matrice acrylique, uréthane ou vinylique et enfin une couche transparente à base de PVDF et de PMMA présentant un gradient de composition. La couche renfort peut être constituée de PBT, PET, ABS, PVC, PA, polyester, PC, polyoléfine, d'un copolymère de l'éthylène et d'un (meth)acrylate d'alkyle, d'un polymère acrylique ou d'un mélange d'au moins deux quelconques de ces polymères.

Le brevet US 5658670 décrit un film bicouche obtenu par coextrusion et pressage à chaud d'une couche de PVDF ou dérivés et d'une couche de PA, polyuréthane ou polyoléfine modifiée par une amine.

La demande de brevet JP 09 193189 A publiée le 29 juillet 1997 décrit un film comportant 4 couches qui de l'intérieur vers l'extérieur sont respectivement une couche de polypropylène, une couche de polypropylène chargé (pigments), une couche d'un copolymère éthylène - glycidyle méthacrylate et une couche de surface transparente à base de polyméthacrylate de méthyle (PMMA).

Les brevets FR 2 740 384 et FR 2 740 385 décrivent un film possédant trois ou quatre couches à base de polyamide et de polypropylène modifié chimiquement permettant de réaliser des surfaces décorées.

### [Le problème technique]

Dans les films de l'art antérieur le point faible est l'adhérence de la couche de polymère fluoré sur les autres couches. On a maintenant trouvé des films dans lesquels l'adhérence de la couche de polymère fluoré est fortement améliorée. On a aussi trouvé plus généralement que des films multicouches, utiles pour la protection et la décoration de substrats, qui ont une couche extérieure en polymère acrylique ou fluoré peuvent facilement décorés. Le film de l'invention est aussi beaucoup plus simple à fabriquer que celui de l'art antérieur, en particulier il ne nécessite pas de solvant.

### [Brève description de l'invention]

La présente invention concerne un film multicouche thermoformable comprenant successivement :
- au moins une couche choisie parmi les couches (A1) et (A2) et telle que si (A2) est présente alors (A2) est disposée contre l'éventuelle couche (B1),
- éventuellement une couche (B1),
- une couche (B2),
- une couche (B3),
- éventuellement une couche (B4),
dans lequel,
- la couche (A1) comprend un polymère fluoré (A111) ou un polymère (A112) constitué essentiellement de motifs (meth)acrylate d'alkyle ou un mélange des deux,
- la couche (A2) est constituée d'encre,
- la couche (B1) comprend un polymère fluoré (B111) ou un polymère (B112) constitué essentiellement de motifs (meth)acrylate d'alkyle ou un mélange des deux,
- la couche (B2) est à base de polyamide à terminaisons amines,
- la couche (B3) est constituée d'une polyoléfine fonctionnalisée par un anhydride d'acide carboxylique insaturé,
- la couche (B4) est en polyoléfine.

Selon une forme particulière de l'invention la couche (A1) est remplacée par deux couches (A11) et (A12), l'ordre des couches étant le suivant :
- (A11) / (A12) / (A2) éventuelle / (B1) éventuelle / (B2) / (B3) / (B4) éventuelle,
- la couche (A11) comprend un polymère fluoré (A111) ou un polymère (A112) constitué essentiellement de motifs (meth)acrylate d'alkyle ou un mélange des deux,
- la couche (A12) comprend en poids 0 à 50% d'un polymère fluoré (A111) et 50 à 100% d'un polymère (A112) constitué essentiellement de motifs (meth)acrylate d'alkyle.

On ne sortirait pas du cadre de l'invention si les différentes couches précitées contiennent des modifiants chocs, des pigments, des encres, des additifs permettant d'améliorer la résistance au vieillissement extérieur tel que des absorbeurs anti-ultra violet ou des anti-oxydants.

Ce film est obtenu par coextrusion des différentes couches, on peut toutes les coextruder, en coextruder au moins deux puis coucher ensuite les autres couches soit séparément soit par coextrusion ou toute combinaison de ces possibilités. Avantageusement on fabrique séparement un film comprenant les couches (B) et un film comprenant les couches (A) et on les assemble à chaud. On peut aussi deposer simultanément par coextrusion couchage toutes les couches (B) sur le film constitué des couches (A) fabriqué auparavant.

Si les couches (A) comprennent ((A1) ou ((A11) et (A12))) et (A2) alors avantageusement la couche (A2) est une couche déposée sur la couche (A1) ou (A12).

Si les couches (A) ne comprennent que (A2) alors on fabrique d'abord le film constitué des couches (B) puis on dépose la couche (A2) sur la couche (B2) ou sur l'éventuelle couche (B1) si elle existe. Dans cette variante la couche (A2) une fois déposée peut être recouverte d'un vernis.

Le film constitué des couches (A) et (B) peut comprendre une couche de protection disposée sur la couche (A) la plus à l'extérieur du film c'est à dire (A1) ou (A11) ou (A2) ou le vernis qui est sur (A2). Cette couche de protection peut être mise dès la fabrication du film constitué des couches (A), pourvu bien sûr qu'il ne soit pas constitué que de (A2), ou être mise après l'assemblage avec les couches (B).

On obtient un film coloré ou décoré grâce à la couche (A2) et /ou les pigments ou les encres qu'on peut ajouter dans les autres couches.

Ce film est utilisé ensuite pour recouvrir différents substrats par exemple en injectant le substrat à l'état fondu sur le film multicouche disposé dans le fond d'un moule d'injection, le film étant disposé contre la paroi du moule du coté des couches (A).

La présente invention concerne aussi des substrats revêtus de ces films.

### [Description détaillée de l'invention]

**S'agissant des couches (A) comprenant (A1) ou (A11) et (A12)** l'ensemble de ces couches est formé d'un polymère ou d'un mélange de polymères permettant d'obtenir une surface transparente, brillante, résistante aux agressions de nature chimique ou extérieure ou aux UV.

la couche (A2) est constituée d'encre pouvant être déposée sur (A1) ou (A12) par toutes les techniques connues de l'art antérieur (héliographie ou flexographie ou sérigraphie ou offset ou sublimation ou impression transfert).

L'ensemble de ces couches (A) présente avantageusement une épaisseur de 1 à 200 µm et de façon préférable de 5 à 140 µm.

A titre d'exemple de polymère fluoré (A111) on citera tout particulièrement
- les PVDF, homopolymères du fluorure de vinylidène (VF2) et les copolymères du fluorure de vinylidène (VF2) contenant de préférence au moins 50 % en poids de VF2 et au moins un autre monomère fluoré tel que le chlorotrifluoroéthylène (CTFE), l'hexafluoropropylène (HFP), le trifluoroéthylène (VF3), le tétrafluoroéthylène (TFE),
- les homo- et copolymères de trifluoroéthylène (VF3),
- les copolymères, et notamment terpolymères, associant les restes des motifs chlorotrifluoroéthylène (CTFE), tétrafluoroéthylène (TFE), hexafluoropropylène (HFP) et/ou éthylène et éventuellement des motifs VF2 et/ou VF3.
Parmi ces polymères fluorés (A111) on utilise avantageusement le PVDF. On ne sortirait pas du cadre de l'invention en utilisant un mélange de polymères (A111).

Dans les couches (A1) et (A11) il est recommandé d'ajouter l'autre polymère (A112) ce qui permet d'augmenter l'adhérence avec la couche (A2) éventuelle ou la couche (A12) ou la couche (B) suivante.

Ces polymères (A112) constitués essentiellement de motifs (meth)acrylate d'alkyle peuvent comprendre aussi des fonctions acide, chlorure d'acide, alcool, anhydride.

A titre d'exemple de polymère (A112) on peut citer les homopolymères d'un (méth)acrylate d'alkyle. Des (méth)acrylates d'alkyle sont décrits dans KIRK-OTHMER, Encyclopedia of chemical technology, 4 ème édition dans le Vol 1 pages 292-293 et dans le Vol 16 pages 475-478. On peut encore citer des copolymères d'au moins deux de ces (méth)acrylates et des copolymères d'au moins un (méth)acrylate avec au moins un monomère choisi parmi l'acrylonitrile, le butadiène, le styrène, l'isoprène pourvu que la proportion de (meth)acrylate soit d'au moins 50% en moles. (A112) est avantageusement le PMMA. Ces polymères (A112) sont soit constitués des monomères et éventuellement des comonomères cités plus haut et ne contiennent pas de modifiant choc soit ils contiennent en plus un modifiant choc acrylique. Les modifiants choc acryliques sont par exemple des copolymères statistiques ou sequencés d'au moins un monomère choisi parmi le styrène, le butadiène, l'isoprène et d'au moins un monomère choisi parmi l'acrylonitrile et les (meth)acrylate d'alkyle, ils peuvent être de type core-shell. Ces modifiants choc acryliques peuvent être mélangés avec le polymère (A112) une fois préparé ou être introduit au cours de la polymérisation de (A112) ou préparés simultanément au cours de la polymérisation de (A112). La quantité de modifiant choc acrylique peut être par exemple de 0 à 60 parties pour 100 à 40 parties de (A112). On ne sortirait pas du cadre de l'invention si (A112) était un mélange de deux ou plusieurs des polymères précédents.

Des polymères appropriés (A112) sont le SUMIPEX TR® de Sumitomo® et l'OROGLASS HT121® d'Atoglass et pour (A111) le KYNAR 720® d'ATOFINA. Cette couche peut contenir différentes charges organiques et/ou inorganiques, par exemple des absorbeurs UV de la famille des TINUVIN® de Ciba Speciality chemicals, cette couche peut aussi contenir des pigments ou des colorants. Cette couche présente une très bonne résistance aux différents fluides utilisés dans l'automobile tels que l'essence, le liquide de refroidissement, le liquide de lave glace, le liquide de freinage, l'huile moteur et le liquide de transmission hydraulique. On obtient une très bonne conservation dans le temps de l'état et de l'aspect de surface du film.

En utilisant la technique d'extrusion on peut obtenir une orientation dans le sens de l'écoulement des pigments ou des colorants dans cette couche rendant l'aspect du film anisotrope. Il suffira d'utiliser pour cela des pigments présentant un rapport d'aspect anisotrope. En choisissant des pigments de rapport d'aspect isotrope (rapport d'aspect voisin de 1) on pourra avantageusement supprimer cet effet. Cette orientation des pigments donne un effet interférentiel.

**S'agissant des couches (A) constituées de la seule couche (A2)** on dépose cette couche (A2) sur la couche éventuelle (B1) ou sur la couche (B2). On procède comme pour le depot de (A2) sur (A1) ou (A12).

**S'agissant de la couche (B1)** le polymère fluoré (B111) peut être choisi parmi les polymères (A111) cités plus haut, il peut être identique ou différent du ou des polymères utilisés dans les couches (A). Le polymère (B112) peut être choisi parmi les polymères (A112) cités plus haut, il peut être identique ou différent du ou des polymères utilisés dans les couches (A). De même que pour les couches (A) les polymères (B111) et (B112) peuvent être des mélanges de polymères.

**Le polyamide de la couche (B2)** est un polyamide homopolymère ou copolymère à terminaisons amines ou un mélange de polyamides, l'un au moins étant à terminaisons amines. On entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique.

A titre d'exemple de polyamide on peut citer le PA 6, le PA 6-6, le PA 11 et le PA 12.

On peut aussi utiliser avantageusement des copolyamides. On peut citer les copolyamides résultant de la condensation d'au moins deux acides alpha oméga aminocarboxyliques ou de deux lactames ou d'un lactame et d'un acide alpha oméga aminocarboxylique. On peut encore citer les copolyamides résultant de la condensation d'au moins un acide alpha oméga aminocarboxylique (ou un lactame), au moins une diamine et au moins un acide dicarboxylique.

A titre d'exemple de lactames on peut citer ceux ayant de 3 à 12 atomes de carbone sur le cycle principal et pouvant être substitués. On peut citer par exemple le β,β-diméthylpropriolactame, le α,α-diméthylpropriolactame, l'amylolactame, le caprolactame, le capryllactame et le lauryllactame.

A titre d'exemple d'acide alpha oméga aminocarboxylique on peut citer l'acide amino-undécanoïque et l'acide aminododécanoïque. A titre d'exemple d'acide dicarboxylique on peut citer l'acide adipique, l'acide sébacique, l'acide isophtalique, l'acide butanedioïque, l'acide 1,4 cyclohexyldicarboxylique, l'acide téréphtalique, le sel de sodium ou de lithium de l'acide sulphoisophtalique, les acides gras dimérisés(ces acides gras dimérisés ont une teneur en dimère d'au moins 98% et sont de préférence hydrogénés) et l'acide dodécanédioïque HOOC-(CH₂)₁₀-COOH.

La diamine peut être une diamine aliphatique ayant de 6 à 12 atomes, elle peut être arylique et/ou cyclique saturée. A titre d'exemples on peut citer l'hexaméthylènediamine, la pipérazine, la tetraméthylène diamine, l'octaméthylène diamine, la décaméthylène diamine, la dodécaméthylène diamine, le 1,5 diaminohexane, le 2,2,4-triméthyl-1,6-diamino-hexane, les polyols diamine, l'isophorone diamine (IPD), le méthyl pentaméthylènediamine (MPDM), la bis(aminocyclohéxyl) méthane (BACM), la bis(3-méthyl-4 aminocyclohéxyl) méthane (BMACM).

A titre d'exemples de copolyamides on peut citer des copolymères de caprolactame et de lauryl lactame (PA 6/12), des copolymères de caprolactame, d'acide adipique et d'hexaméthylène diamine (PA 6/6-6), des copolymères de caprolactame, de lauryle lactame, d'acide adipique et d'hexaméthylène diamine (PA 6/12/6-6), des copolymères de caprolactame, de lauryle lactame, d'acide amino 11 undécanoïque, d'acide azélaïque et d'hexaméthylène diamine (PA 6/6-9/11/12), des copolymères de caprolactame, de lauryle lactame, d'acide amino 11 undécanoïque, d'acide adipique et d'hexaméthylène diamine (PA 6/6-6/11/12), des copolymères de lauryle lactame, d'acide azélaïque et d'hexaméthylène diamine (PA 6-9/12). Avantageusement le copolyamide est choisi parmi le PA 6 / 12 et le PA 6 / 6-6. L'avantage de ces copolyamides est leur température de fusion inferieure à celle du PA 6.

Pour obtenir des terminaisons amines il suffit d'effectuer la synthèse en présence d'un excès de diamine ou pour les polyamides (et copolyamides) qui sont fabriqués à partir de lactame ou d'acide alpha oméga aminocarboxylique d'utiliser une diamine ou une monoamine comme limiteur de chaîne.

A titre d'exemple on peut citer (1) les mélanges de polyamides miscibles et (2) les mélanges monophasiques résultant de la transamidification de polyamide et de polyamide semi aromatique amorphe. Des mélanges avantageux sont ceux qui sont encore cristallins et transparents c'est à dire microcristallins, par exemple des mélanges comprenant en poids 70% de PA 12 et 30% de PA 12/ BMACM- I/ BMACM- T, "I" et "T" désignant respectivement les acides iso et téréphtalique. On peut encore citer le PA BMACM- 12 et le PA PACM- 12 (PACM représente le para amino dicyclohexylméthane).

On ne sortirait pas du cadre de l'invention en utilisant des mélanges de polyamides avec une polyoléfine. Avantageusement ces mélanges sont à matrice polyamide c'est à dire qu'ils contiennent (en poids) 55 à 100 parties de polyamide pour 0 à 45 parties de polyoléfine, la polyoléfine peut être fonctionnalisée ou être un mélange d'une polyoléfine fonctionnalisée et d'une polyoléfine non fonctionnalisée. A titre d'exemple on peut utiliser les polyoléfines fonctionnalisées et non fonctionnalisées décrites dans la couche (D).

Un polyamide convenant particulièrement est le PA 12 AESNO TL® de ATOFINA®, qui permet, si (B2) contient des fonctions, de réaliser via une réaction chimique une liaison covalente stable dans le temps avec les fonctions anhydride, acide, chlorure d'acide ou alcool présentent dans une autre couche en contact avec (B2). L'épaisseur de cette couche est avantageusement comprise entre 5 et 200 µm et de façon préférable entre 70 et 140 µm. Cette couche peut contenir différentes charges organiques et/ou inorganiques, par exemple des absorbeurs UV de la famille des TINUVIN® de Ciba Speciality chemicals, cette couche peut aussi contenir des pigments ou des colorants.

En utilisant la technique d'extrusion on peut obtenir une orientation dans le sens de l'écoulement des pigments ou des colorants dans cette couche rendant l'aspect du film anisotrope. Il suffira d'utiliser pour cela des pigments présentant un rapport d'aspect anisotrope. En choisissant des pigments de rapport d'aspect isotrope (rapport d'aspect voisin de 1) on pourra avantageusement supprimer cet effet. Cette orientation des pigments donne un effet interférentiel.

**La couche (B3)** est constituée d'une polyoléfine fonctionnalisée par un anhydride d'acide carboxylique insaturé. La présence de la fonction anhydride permet une réaction d'imidation avec les fonctions amines de la couche (B2) permettant la formation d'un lien stable dans le temps. Cette polyoléfine fonctionnalisée est souvent décrite dans l'art antérieur sous le qualificatif de liant de coextrusion.

Une polyoléfine est classiquement un homo polymère ou copolymère d'alpha oléfines ou de dioléfines, telles que par exemple, éthylène, propylène, butène-1, octène-1, butadiène. A titre d'exemple, on peut citer :
- les homo polymères et copolymères du polyéthylène, en particulier LDPE, HDPE, LLDPE(linear low density polyéthylène, ou polyéthylène basse densité linéaire), VLDPE(very low density polyéthylène, ou polyéthylène très basse densité) et le polyéthylène métallocène .
- les homopolymères ou copolymères du propylène.
- les copolymères éthylène/alpha-oléfine tels qu'éthylène/propylène, les EPR(abréviation d'éthylène-propylene-rubber) et éthylène/propylène/diène (EPDM).
- les copolymères blocs styrène/éthylène-butène/styrène (SEBS), styrène/butadiène/styrène (SBS), styrène/isoprène/ styrène (SIS), styrène/éthylène-propylène/styrène (SEPS).
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle, la proportion de comonomère pouvant atteindre 40% en poids.

La polyoléfine fonctionnalisée de la couche (B3) peut être un polymère d'alpha oléfines ayant des motifs anhydride d'acide carboxylique insaturé. À titre d'exemple, on peut citer les polyoléfines précédentes greffées ou copolymérisées par des anhydrides d'acides carboxyliques insaturés. Les procédés de greffage sont connus de l'homme de l'art. On ne sortirait pas du cadre de l'invention en utilisant des acides carboxyliques insaturés ainsi que les dérivés de ces acides et anhydrides. A titre d'exemple on peut citer l'acide acrylique, l'acide méthacrylique, l'acide maléique, l'acide fumarique, l'acide itaconique, l'acide crotonique, l'anhydride itaconique, l'anhydride nadique, l'anhydride maléique et les anhydrides maléiques substitués tel que par exemple l'anhydride diméthyl maléique. A titre d'exemples de dérivés, on peut citer les sels, les amides, les imides et les esters tels que le mono et dimaléate de sodium, l'acrylamide, le maleimide et le fumarate de diméthyle. l'acide (méth)acrylique peut être neutralisé totalement ou partiellement par des métaux tels que Zn, Ca, Li. Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5% en poids.

Avantageusement (B3) est à base de polypropylène par exemple comprenant essentiellement du polypropylène homo ou copolymère fonctionnalisé par greffage d'au moins un acide carboxylique insaturé, un anhydride d'acide carboxylique insaturé ou des dérivés de ces acides et anhydrides. Ces produits ont déjà été cités plus haut. Avantageusement, on greffe du polypropylène de MFI (abréviation de Melt Flow Index ou indice de fluidité à l'état fondu) 0,1 à 10g/10 mm à (230° C sous 2,16 kg) par de l'anhydride maléique en présence d'initiateurs tels que des peroxydes. La quantité d'anhydride maléique effectivement greffée peut être comprise entre 0,01 et 10 % en poids du polypropylène greffé. Le polypropylène greffé peut être dilué par du polypropylène, des caoutchoucs EPR, EPDM ou des copolymères du propylène et d'une alpha oléfine. On peut aussi, selon une autre variante, effectuer un cogreffage d'un mélange de polypropylène et d'EPR ou d'EPDM, c'est-à-dire ajouter un acide carboxylique insaturé, un anhydride ou leurs dérivés dans un mélange de polypropylène et d'EPR ou d'EPDM en présence d'un initiateur.

A titre d'autres exemples de constituants de la couche (B3) on peut citer les mélanges comprenant en poids :
- 0 à 50% et de préférence 10 à 40% d'au moins un polyéthylène ou un copolymère de l'éthylène,
- 50 à 100% et de préférence 60 à 90% d'au moins un polymère choisi parmi le polypropylène ou un copolymère du propylène, le poly (1-butène) homo ou copolymère, le polystyrène homo ou copolymère et de préférence le polypropylène,
- ces mélanges étant greffés par un monomère fonctionnel choisi parmi les acides carboxyliques et leurs dérivés, les chlorures d'acides, les isocyanates, les oxazolines, les époxydes, les amines ou les hydroxydes et de préférence les anhydrides d'acides dicarboxyliques insaturés.
- ces mélanges greffés étant éventuellement dilués dans au moins une polyoléfine comprenant essentiellement des motifs propylene ou dans au moins un polymère à caractère élastomérique ou dans leur mélange.

Des polymères utilisables pour cette couche (B3) sont par exemple les polypropylènes greffés d'ATOFINA et de DuPont vendus respectivement sous les marques OREVAC PPFT® et BYNEL 50E561®.

L'épaisseur de cette couche est avantageusement comprise entre 10 et 250 µm et préférentiellement entre 40 et 110 µm. Cette couche peut contenir différentes charges organiques et/ou inorganiques, par exemple des absorbeurs UV de la famille des TINUVIN® de Ciba Speciality chemicals, cette couche peut aussi contenir des pigments ou des colorants.

En utilisant la technique d'extrusion on peut obtenir une orientation dans le sens de l'écoulement des pigments ou des colorants dans cette couche rendant l'aspect du film anisotrope. Il suffira d'utiliser pour cela des pigments présentant un rapport d'aspect anisotrope. En choisissant des pigments de rapport d'aspect isotrope (rapport d'aspect voisin de 1) on pourra avantageusement supprimer cet effet. Cette orientation des pigments donne un effet interférentiel. (B3) peut être aussi un mélange de plusieurs polyoléfines greffées.

**La couche de liaison (B4)** qui permet de réaliser le collage avec le substrat est une polyoléfine, les polyoléfines ont été définies dans la couche (B3). Ces matériaux possèdent une compatibilité et une affinité suffisantes pour permettre un collage avec la couche (B3) et le substrat. On utilise avantageusement le polypropylène. Des matériaux convenant parfaitement pour la réalisation de cette couche sont les polypropylènes 3050 BN1, 3060 MN5 et CZN 0525 de la société ATOFINA. L'épaisseur de cette couche est avantageusement comprise entre 400 et 800 µm et de façon préférable entre 500 et 600 µm. Cette couche peut contenir différentes charges organiques et/ou inorganiques, par exemple des absorbeurs UV de la famille des TINUVIN® de Ciba Speciality chemicals, cette couche peut aussi contenir des pigments ou des colorants.

En utilisant la technique d'extrusion on peut obtenir une orientation dans le sens de l'écoulement des pigments ou des colorants dans cette couche rendant l'aspect du film anisotrope. Il suffira d'utiliser pour cela des pigments présentant un rapport d'aspect anisotrope. En choisissant des pigments de rapport d'aspect isotrope (rapport d'aspect voisin de 1) on pourra avantageusement supprimer cet effet. Cette orientation des pigments donne un effet interférentiel.

**La couche de protection disposée sur la couche (A) la plus à l'extérieur du film** est une couche provisoire permettant de protéger le film pendant sa manutention, le thermoformage et l'injection. Cette couche protectrice permet de maintenir ou de promouvoir un état de surface donné. Ainsi cette couche pourra être lisse ou rugueuse suivant l'état de surface désiré. Cette couche évite l'utilisation d'agent de démoulage susceptible de dégrader l'état de surface du film. Cette couche présente avantageusement une épaisseur comprise entre 10 et 150 µm et préférentiellement de 50 à 100 µm. Les matériaux utilisables pour réaliser cette couche peuvent être choisis parmi (i) les polyesters saturés tels que le PET, le PBT, les copolyesters et les polyetheresters et (ii) les polyoléfines homopolymères ou copolymères tels que les polyéthylènes et les polypropylènes. A titre d'exemple on peut citer le PET vendu sous la marque MYLAR ®par la société DuPont. Cette couche peut contenir différentes charges, comme le TiO₂, la silice, le kaolin, le carbonate de calcium, des paillettes d'aluminium et leurs dérivés.

**S'agissant de la fabrication du film de l'invention et de son utilisation** les compositions des différentes couches peuvent être effectuées par les techniques habituelles de mélange des constituants à l'état fondu dans lequel on ajoute les autres constituants tels que les charges éventuelles (pigments, encres, anti U.V. etc ... ). Le film est fabriqué avantageusement par coextrusion.

Le film de l'invention est fabriqué par coextrusion selon une technique habituelle des thermoplastiques dans laquelle on force la matière fondue des différentes couches à travers des filières plates disposées très proches les unes des autres, l'association des matières fondues forme le film multicouches qu'on refroidit par passage sur des rouleaux à température contrôlée. En ajustant les vitesses de rouleaux disposés dans le sens longitudinal et/ou de rouleaux disposés dans le sens transversal on peut provoquer un étirage dans le sens longitudinal et/ou dans le sens transversal.

Les MFI des différentes couches sont choisis aussi proche que possible, entre 1 et 20 (à 230°C, 2,16 kg), les MFI sont de façon avantageuse compris entre 4 et 7, ce choix est du ressort de l'Homme de métier de la coextrusion.

Le film multicouche de l'invention est utile pour recouvrir des substrats soit par sur surmoulage, soit par coextrusion, soit par couchage soit encore par pressage à chaud. On utilise avantageusement la technique du surmoulage. Si le moule est de forme simple l'injection du substrat à l'état fondu suffit à plaquer le film contre la paroi du moule, on utilise alors le film tel qu'on l'a obtenu. Si le moule est de forme plus compliquée, pour éviter des contraintes dans le film et pour assurer un bon contact du film avec les parois du moule il est nécessaire de preformer le film par therformage avant de le mettre dans le moule. On peut utiliser un autre moule de même forme et à l'aide d'une pièce ayant la même forme mais en positif on thermoforme le film, on peut aussi utiliser le même moule qui sert à l'injection du substrat. On peut aussi pour des conditions intermédiaires des précédentes ne pas faire de thermoformage mais mettre le film tel quel dans le moule et par de l'air comprimé du coté ou est injecté le substrat plaquer le film sur la paroi du moule. On peut aussi faire le vide de l'autre coté du film pour le plaquer contre la paroi du moule.

Si le film doit être thermoformé les produits utilisés devront présenter une gamme de température de thermoformage présentant une zone de recouvrement aussi large que possible. A titre d'exemple on cite dans le tableau-1 suivant la température de fusion (Tf), la température minimum de thermoformage (THF MIN) et la température maximum de thermoformage (THF MAX) de différents constituants des couches du film de l'invention.

**Tab 1 :**

| Gamme de température de thermoformage. | | | |
|---|---|---|---|
| PRODUIT | **Tf (°C)** | **THF MIN.** | **THF MAX.** |
| polypropylène homopolymère | 165-175 | Tf-25°C | Tf+5°C |
| polypropylène copolymère | 160-171 | Tf-20°C | Tf+30°C |
| polypropylène maléisé | 160-175 | Tf-25°C | Tf+5°C |
| PA 6 | 210-221 | Tf-25°C | Tf+5°C |
| PA 6/6-6 | 180-190 | Tf-25°C | Tf+20°C |
| PA 11 | 183-192 | Tf-25°C | Tf+5°C |
| PA 12 | 178-180 | Tf-25°C | Tf+5°C |
| Mélange de PA 6 et polyoléfine | 200-225 | Tf-25°C | Tf+5°C |
| PVDF homopolymère | 168-172 | Tf-25°C | Tf+5°C |
| PMMA | Tg=90-105 | Tg+20°C | Tg+60°C |
| PVDF/PMMA (60/40) | 168-172 | Tf-25°C | Tf+5°C |

Les différentes couches peuvent contenir des charges et additifs pourvu que les propriétés de transparence de la couche supérieure (B) et les couleurs et les effets de couleurs de l'ensemble de la structure ne soient pas affectés.

L'invention est particulièrement utile pour recouvrir des substrats en polypropylène.

## Revendications

1. Film multicouche thermoformable comprenant successivement :
• au moins une couche choisie parmi les couches (A1) et (A2) et telle que si (A2) est présente alors (A2) est disposée contre l'éventuelle couche (B1),
• éventuellement une couche (B1),
• une couche (B2),
• une couche (B3),
• éventuellement une couche (B4),
dans lequel,
• la couche (A1) comprend un polymère fluoré (A111) ou un polymère (A112) constitué essentiellement de motifs (meth)acrylate d'alkyle ou un mélange des deux,
• la couche (A2) est constituée d'encre,
• la couche (B1) comprend un polymère fluoré (B111) ou un polymère (B112) constitué essentiellement de motifs (meth)acrylate d'alkyle ou un mélange des deux,
• la couche (B2) est à base de polyamide à terminaisons amines,
• la couche (B3) est constituée d'une polyoléfine fonctionnalisée par un anhydride d'acide carboxylique insaturé,
• la couche (B4) est en polyoléfine.

2. Film selon la revendication 1 dans lequel la couche (A1) est remplacée par deux couches (A11) et (A12), l'ordre des couches étant le suivant :
• (A11) / (A12) / (A2) éventuelle / (B1) éventuelle / (B2) / (B3) / (B4) éventuelle,
• la couche (A11) comprend un polymère fluoré (A111) ou un polymère (A112) constitué essentiellement de motifs (meth)acrylate d'alkyle ou un mélange des deux,
• la couche (A12) comprend en poids 0 à 50% d'un polymère fluoré (A111) et 50 à 100% d'un polymère (A112) constitué essentiellement de motifs (meth)acrylate d'alkyle.

3. Film selon l'une quelconque des revendications précédentes dans lequel le polymère fluoré (B111) et (A111) est le PVDF.

4. Film selon l'une quelconque des revendications précédentes dans lequel le polymère (B112) et (A112) est le PMMA.

5. Film selon l'une quelconque des revendications précédentes dans lequel le polyamide de la couche (B2) est choisi parmi le PA 6, le PA 12 et le PA 6/6-6 ces polyamides étant à terminaisons amines.

6. Film selon l'une quelconque des revendications précédentes dans lequel la polyoléfine fonctionnalisée de la couche (B3) est du polypropylène greffé éventuellement dilué par du polypropylène, des caoutchoucs EPR, EPDM ou des copolymères du propylène et d'une alpha oléfine.

7. Film selon l'une quelconque des revendications 1 à 5 dans lequel la polyoléfine fonctionnalisée de la couche (B3) résulte d'un cogreffage d'un mélange de polypropylène et d'EPR ou d'EPDM.

8. Film selon l'une quelconque des revendications 1 à 5 dans lequel la polyoléfine fonctionnalisée de la couche (B3) est un mélange comprenant en poids :
- 0 à 50% et de préférence 10 à 40% d'au moins un polyéthylène ou un copolymère de l'éthylène,
- 50 à 100% et de préférence 60 à 90% d'au moins un polymère choisi parmi le polypropylène ou un copolymère du propylène, le poly (1-butène) homo ou copolymère, le polystyrène homo ou copolymère et de préférence le polypropylène,
- ce mélange étant greffé par un anhydride d'acide carboxylique insaturé,
- ce mélange greffé étant éventuellement dilué dans au moins une polyoléfine comprenant essentiellement des motifs propylène ou dans au moins un polymère à caractère élastomérique ou dans leur mélange.

9. Film selon l'une quelconque des revendications précédentes dans lequel la polyoléfine de la couche (B4) est du polypropylène.

10. Substrat revêtu d'un film selon l'une quelconque des revendications précédentes dans lequel la couche (B3) ou la couche (B4) si elle existe film est contre le substrat.

11. Substrat selon la revendication 10 constitué de polypropylène.
